# EUROPEAN PATENT SPECIFICATION

(11) **EP 2 563 159 B1**
(45) Date of publication and mention of the grant of the patent: **02.12.2015**
(21) Application number: 10720370.5
(22) Date of filing: 26.04.2010
(51) Int. Cl.: A23K 1/00, A23K 1/10, A23K 1/14, A23K 1/16, A23L 1/00, A23L 1/0522, A23L 1/164

(54) **A DUAL COMPONENT FOOD PRODUCT AND METHOD FOR THE PRODUCTION THEREOF**
ZWEIKOMPONENTEN-LEBENSMITTELPRODUKT UND VERFAHREN ZU SEINER HERSTELLUNG
PRODUIT ALIMENTAIRE À DEUX COMPOSANTS ET SON PROCÉDÉ DE FABRICATION

(43) Date of publication of application: 06.03.2013
(73) Proprietor: Mark & Chappell (Ireland) Limited, Kilcoole, Co. Wicklow (IE)
(72) Inventor: STEPISNIK, Gregor, 3230 Sentjur (SI); GANNON, Frank, Kilmacanogue, Co. Wocklow (IE)
(74) Representative: Curley, Donnacha John
(86) International application number: PCT/EP2010/055566
(87) International publication number: WO 2011/134494

(56) References cited:
- EP-A1- 0 146 174
- EP-A2- 0 222 601
- WO-A1-00/10405
- WO-A1-99/51102
- WO-A1-02/052951
- WO-A1-2009/039472
- WO-A2-2005/006880
- US-A- 3 808 340
- US-A1- 2010 303 951

## Description

### Technical Field

The invention relates to a co-extruded dual component food product of the type comprising a cream textured inner component encapsulated within a cereal-based outer component. In particular, the invention relates to a co-extruded dual component pet food product of the type comprising a cream textured inner component encapsulated within a cereal-based outer component. The invention also provides a method for production of a dual component food product of the type comprising a cream textured inner component encapsulated within a cereal-based outer component.

### Background to the Invention

Co-extruded dual component pet food products are known and are described in WO9947000 (Mars Inc.) and WO02052951 (Gannon). In WO9947000, the inner cream is provided in the form of a mixture of animal fat and solids without any aqueous phase, thereby providing a product with low water activity with a view to avoiding the problems of stability associated with adding water to the inner cream component. However, the use of tallow and other animal fats having a relatively high melting point requires that the lipid phase is heated to enable processing and pumping, which adds cost to the production. WO 99/51102 describes a spreadable water-in-oil emulsion filling comprising water, a fat phase comprising a fat with a high SFI (solid fat index), or a combination of fats with high and low SFI's, a mixture of emulsifiers with high and low HLB values and a stabilizer. The stabilizer is preferably a hydrophilic colloid, that is, a starch, a gum or a chemically modified polysaccharide. Dough products filled with the emulsion filling are described. In WO02052591, the problem of stability of the product is addressed by providing the inner cream component in the form of a water in oil emulsion, in which the aqueous phase is provided in the form of a high solids content sugar syrup. However, this solution has not worked as the aqueous phase has been found to leak into the surrounding shell, thereby changing the textural, palatability and stability characteristics of the shell and product.

It is an object of the invention to alleviate this problem.

### Brief Description of the Invention

In one aspect, the invention provides a co-extruded dual component food product of the type comprising a cereal-based outer component and an inner cream textured component encapsulated within the cereal-based outer component, the cream textured component suitably comprising a water-in-oil emulsion, characterised in that the aqueous phase of the emulsion comprises at least partly gelatinised starch.

In another aspect, the invention provides a co-extruded dual component food product of the type comprising a cereal-based outer component and an inner cream textured component encapsulated within the cereal-based outer component, the cream textured component typically comprising an aqueous phase dispersed in a continuous oil phase, characterised in that the cream textured component comprises at least 10% starch, wherein at least a portion of the starch is located within the aqueous phase in the form of at least partially gelatinised starch.

In this specification, the term "at least partially gelatinised starch" should be understood to mean that the starch is at least partially gelatinised or that at least a portion of the starch is partially ungelatinised.

The invention also relates to a method of producing a dual component food product of the type comprising a cream textured inner component encapsulated within a cereal-based outer component, the method comprising the steps of:
- providing an aqueous phase comprising starch;
- mixing the aqueous phase with an oil phase to provide a cream textured inner component in the form of a water in oil emulsion having a first viscosity;
- preparing and cooking the cereal-based outer component;
- extruding- the hot cereal-based outer component;
- injecting the cream textured inner component into the hot cereal based outer component; and
- allowing the starch in the aqueous phase to at least partly gelatinise to provide a cream textured component having a viscosity greater than the first viscosity.

Compared to the food product of WO02/052951, in which the aqueous phase comprises a high solids syrup, the aqueous phase of the food product of the present invention is stabilised with starch. While starch is a known stabiliser.in food products, its use as a stabiliser in food products generally involves heating the starch to change the conformation of the polymer which alters the functional properties of the molecule. In the present invention, the starch that is employed is not cooked or heated until the product is formed (i.e. after the cream component has been injected into the hot extruded outer component). Surprisingly, it has been found that the starch in the aqueous phase is cooked within the shell due to the heat from the shell. This has been found to be sufficient to gelatinise some of the starch within the aqueous phase, thereby increasing the viscosity of the aqueous phase and of the cream component. This increase in viscosity prevents water in the aqueous phase leaching out into the cereal-based outer component. Additionally, the starch in the aqueous phase is typically initially ungelatinised, and thus it does not contribute greatly to viscosity of the cream textured component. However, as the cream is pumped into the hot formed outer component, the starch in the aqueous phase is heated and gelatinises, thereby thickening the aqueous phase making it more stable. A further advantage of this is that the viscosity of the cream is quite low at the early stages of the process, which facilitates processing and pumping, and only increases in viscosity towards the end of the process and after the product has been formed.

Suitably, the protein content of the outer component is greater than 7%, or at least 8%, 9%, 10%, 11%, 12%, 13%, 14%, 15%, 16%, 17%, 18%, 19% or 20% (w/w, i.e. weight per weight of the outer component). Surprisingly, the Applicants have shown that increasing the protein content of the outer shell component counteracts the palatability problems caused by water leaching into the shell by decreasing the porosity of the shell and therefore decreasing the ability of the water to leach into the shell.

Typically, the cream textured component comprises at least 50%, 52%, 54%, 56%, 58%, 60%, 62%, 65%, 67%, 70%, 72%, 75%, 78%, 80%, 82%, 85%, 87%, 90%, 92% or 95% lipid (w/w).

Preferably, the lipid is selected from lipid that is liquid at ambient temperature. Typically, at least 50%, 55%, 60%, 65%, 70%, 75%, 80%, 85%, 90%, 95%, 98% or 99% of the lipid is plant oils (w/w). Details of suitable plant oils will be known to those skilled in the art, and include canola oil, sunflower oil, flaxseed, olive oil, palm oil, soybean oil, safflower oil or any other suitable plant oils. Compared with the products of the prior art which employ hard, saturated, animal fats (i.e. tallow oil) and non-lipid hydrocarbons (petrolatum), the use of unsaturated, low melting point, plant oils provide nutritional advantages, in particular in relation to improving the condition of the pets coat.

Suitably, the water activity A_{w} of the cream textured component is less than or equal to 0.65, preferably less than 0.60, 0.55, 0.50, 0.45, 0.40, 0.35. In a preferred embodiment of the invention, the water activity AW is from 0.35 to 0.65, ideally from 0.35 to 0.60. Thus, the water activity of the product of the invention is low, thereby obviating any obvious spoilage problems associated with water in the product. At the same time, the product includes a distinct aqueous phase which can act as a carrier for water soluble additives such as, for example, water soluble vitamins and minerals. Thus, in one embodiment of the invention, the food product includes process sensitive ingredients, suitable process sensitive water soluble ingredients. Process sensitive ingredients include those sensitive to damage due to heat or oxidation, for example.

Typically, the cereal-based outer component has a moisture content of less than 12%, 10%, 9%, 8%, 7%, or 6% (w/w ie weight per weight of the outer component). It is important that the moisture content of the outer component is controlled otherwise the shell will either be too soft or too dry thereby affecting the overall palatability of the product.

Generally, the cereal-based outer component comprises at least 70%, 75%, 80%, 85% cereal by-products (w/w). Examples of suitable cereal by-products will be known to those skilled in the field and include cereal flour, cereal bran (for example wheat flour, rice flour, wheat bran and rice bran).

Generally, the cereal-based outer component comprises at least 1%, 2%, 3%, 4%, 5%, 6%, 7%, 8%, 9% 10%, 11%, 12%, 13%, 14% or 15% milk powder (w/w). Examples of suitable milk powders will be known to those skilled in the field and include whole milk powder, skim milk powder, whey and/or casein powders, and the like.

Typically, the cereal-based outer component comprises at least 3%, 4%, 5%, 6%, 8%, 9%, 10%, 11%, 12%, 13%, 14% or 15% animal meal. Ideally, the animal meal is poultry meal, typically having a protein content of at least 50%, 55%, 60% (w/w). High protein content animal meals (i.e. animal meal having a protein content of at least 70%, 65%, 60% or 55% (w/w) have been found to be ideal for decreasing the porosity of the formed outer component.

Generally, the cereal-based outer component comprises 0 to 10% liquid palatant, ideally from 5 to 10% liquid palatant (w/w). As indicated above, the palatability of the outer component is determined in large part by the moisture content of the shell (outer component). Thus, it is not desirable to add any liquids to the outer component. Surprisingly, the Applicant has discovered that liquid palatants may be added to the outer shell in amounts of up to 10% (weight per weight of the shell) without affecting the palatability of the product to domestic pets. Ideally, the liquid palatant is a salmon palatant, although other palatants are envisaged.

Suitably, the cream textured component comprises at least 10% starch (w/w). Preferably, the cream textured component comprises at least 12%, 15%, 17%, 20%, 22%, 25%, 27%, 30%, 32%, 35%, 37%, 40% starch (w/w). It is envisaged at a later point to include further additional stabilising components to add more beneficial properties to the inner cream.

Typically, the starch is provided in the form of starch powder. In one embodiment, the starch powder is at least partly gelatinised starch. In another embodiment, the starch powder is ungelatinised starch (i.e. less that 2%, preferably less than 1% of the starch is gelatinised).

Suitably, the aqueous phase comprises from 2% to 8% of the cream textured inner component (v/v). Typically, the moisture content of the inner component is from 15% to 2%, 14% to 3%, 13% to 4%, 12% to 5%, 11% to 6%, 10% to 7%, and 9% to 8%. (v/v). Ideally less than 15%, 14%, 13%, 12%, 11%, 10%, 9%, 8%, 7%, 6%, 5% of the inner component is moisture (v/v). Generally, sufficient quantities of water are added to the water soluble ingredients in the cream formulations during the preparation of the cream phase just to ensure complete solubilisation of the ingredients. If too much water is added the stability of the cream textured component to phase separation is greatly increased. The water is added slowly to the oil phase and mixed under high speed to force the ingredients together. Soy lecithin (an emulsifier is added to the oil phase to improve the ease of mixing. Then the mixture is homogenised to improve the stability by reducing the particle size of the dispersed droplets. Depending on the quantities of water involved in the cream phase formulation sometimes this mixture is double homogenised to further improve stability.

Thus, in one embodiment, the invention provides a co-extruded dual component food product of the type comprising a cereal-based outer component and an inner cream textured component encapsulated within the cereal-based outer component, the cream textured component suitably comprising a water-in-oil emulsion having a dispersed aqueous phase, wherein the inner cream textured component comprises at least 20%, ideally at least 30% starch, and wherein the aqueous phase comprises at least partly gelatinised starch.

Thus, in one embodiment, the invention provides a co-extruded dual component food product of the type comprising a cereal-based outer component and an inner cream textured component encapsulated within the cereal-based outer component, the cream textured component suitably comprising a water-in-oil emulsion having a dispersed aqueous phase, wherein the inner cream textured component comprises at least 20%, ideally at least 30% starch, wherein the protein content of the outer component is at least 8%, 9%, 10% or 11 % (w/w).

In another embodiment, the invention provides a co-extruded dual component food product of the type comprising:
- a cereal-based outer component having less that 20% moisture (by weight of the outer component)) and comprising 50% to 90% (w/w) cereal by products, 1 to 20% milk powder, and 1 to 20% animal meal; and
- an inner cream textured component encapsulated within the cereal-based outer component, the cream textured component suitably comprising a water-in-oil emulsion having an aqueous phase dispersed within a continuous lipid phase, wherein the inner cream textured component comprises 10% to 40% starch, 50 to 90% lipid, and 15% to 2% water, and optionally an emulsifier.

In another embodiment, the invention provides a co-extruded dual component food product of the type comprising:
- a cereal-based outer component having less that 20% moisture (by weight of the outer component)) and comprising 50% to 90% (w/w) cereal by products, 1 to 20% milk powder, and 5 to 15% animal meal; and
- an inner cream textured component encapsulated within the cereal-based outer component, the cream textured component suitably comprising a water-in-oil emulsion having an aqueous phase dispersed within a continuous lipid phase, wherein the inner cream textured component comprises 20% to 40% starch, 50 to 80% lipid, and 15% to 2% water, and optionally an emulsifier.

In another aspect, the invention provides a co-extruded dual component food product of the type comprising a cereal-based outer component and an inner cream textured component encapsulated within the cereal-based outer component, the cream textured component comprising an oil phase, characterised in that the cereal-based outer component comprises greater than 7% protein (w/w).

Suitably, the protein content of the outer component is at least 8%, 9%, 10%, 11%, 12%, 13%, 14%, 15%, 16%, 17%, 18%, 19% or 20% (w/w, i.e. weight per weight of the outer component).

Surprisingly, the Applicants have shown that increasing the protein content of the outer shell component counteracts the palatability problems caused by water leaching into the shell by decreasing the porosity of the shell and therefore decreasing the ability of the water to leach into the shell.

Typically, the cream textured component comprises at least 50%, 52%, 54%, 56%, 58%, 60%, 62%, 65%, 67%, 70% lipid (w/w). Anything over 70% lipids in the cream textured component would run the risk of further leeching into the cereal shell.

Preferably, the lipid is selected from lipid that is liquid at ambient temperature. Typically, at least 50%, 55%, 60%, 65%, 70%, 75%, 80%, 85%, 90%, 95%, 98% or 99% of the lipid is plant oils (w/w). Details of suitable plant oils will be known to those skilled in the art, and include canola oil, canola oil, sunflower oil, flaxseed, olive oil, palm oil, soybean oil, safflower oil or any other suitable plant oils.

Suitably, the water activity A_{w} of the cream textured component is less than or equal to 0.65, preferably less than 0.60, 0.55, 0.50, 0.45, 0.40, 0.35. In a preferred embodiment of the invention, the water activity AW is from 0.35 to 0.65, ideally from 0.35 to 0.60.

Typically, the cereal-based outer component has a moisture content of less than 15%, 12%, 10%, 9%, 8%, 7%, 6%, 5%, 4% or 3% (w/w ie weight per weight of the outer component).

Generally, the cereal-based outer component comprises at least 70%, 75%, 80%, 85% cereal by-products (w/w). Examples of suitable cereal by-products will be known to those skilled in the field and include cereal flour, cereal bran (for example wheat flour, rice flour, wheat bran and rice bran).

Generally, the cereal-based outer component comprises at least 1%, 2%, 3%, 4%, 5%, 6%, 7%, 8%, 9% 10%, 11%, 12%, 13%, 14% or 15% milk powder (w/w). Examples of suitable milk powders will be known to those skilled in the field and include whole milk powder, skim milk powder, whey and/or casein powders, and the like.

Typically, the cereal-based outer component comprises at least 3%, 4%, 5%, 6%, 8%, 9%, 10%, 11%, 12%, 13%, 14% or 15% animal meal. Ideally, the animal meal is poultry meal, typically having a protein content of at least 70%, 60% or 50% (w/w).

Generally, the cereal-based outer component comprises 0 to 10% liquid palatant, ideally from 5 to 10% liquid palatant (w/w). Ideally, the liquid palatant is a salmon palatant, although other palatants are envisaged.

Suitably, the cream textured component comprises at least 10% starch (w/w). Preferably, the cream textured component comprises at least 12%, 15%, 17%, 20%, 22%, 25%, 27%, 30%, 32%, 35%, 37%, 40% starch (w/w).

Typically, the starch is provided in the form of starch powder. In one embodiment, the starch powder is at least partly gelatinised starch. In another embodiment, the starch powder is ungelatinised starch (i.e. less that 2%, preferably less than 1 % of the starch is gelatinised).

Suitably, the aqueous phase comprises from 2% to 8% of the cream textured inner component (v/v). Typically, the moisture content of the inner component is from 15% to 2%, 14% to 3%, 13% to 4%, 12% to 5%, 11% to 6%, 10% to 7%, and 9% to 8%. (v/v). Ideally less than 15%, 14%, 13%, 12%, 11%, 10%, 9%, 8%, 7%, 6%, 5% of the inner component is moisture (v/v). Generally, sufficient quantities of water are added to the water soluble ingredients in the cream formulations during the preparation of the cream phase just to ensure complete solubilisation of the ingredients. If too much water is added the stability of the cream textured component to phase separation is greatly increased. The water is added slowly to the oil phase and mixed under high speed to force the ingredients together. Soy lecithin (an emulsifier is added to the oil phase to improve the ease of mixing. Then the mixture is homogenised to improve the stability by reducing the particle size of the dispersed droplets. Depending on the quantities of water involved in the cream phase formulation sometimes this mixture is double homogenised to further improve stability.

### Detailed Description of the Invention

The invention relates to co-extruded dual texture food products, especially pet food products. The product comprises an outer component (shell) which encases, suitably wholly encapsulates, an inner cream textured component (cream). The outer shell has a harder texture than the inner cream. In one embodiment, the shell comprises a relatively high protein content (i.e. 8% or greater) which reduces the porosity of the shell compared to the shells of the prior art. The reduction of the porosity has been found to inhibit the transfer of water from the inner cream to the outer shell. This is important, as water passing into the shell has been found to decrease the palatability of the product to an animal. The protein in the shell comes from a number of sources, for example from cereal by-products, milk powders or animal meal. In a preferred embodiment, the shell comprises at least 5% high protein animal meal, typically in addition to cereal by-products and milk powder.

In another aspect, the food product of the invention comprises a cream that includes a water in oil emulsion (in which the water is typically added water, that is to say, not moisture from then other ingredients). Thus, the emulsion typically comprises an aqueous phase dispersed within a continuous oil phase, and suitably the oil phase is predominantly lipid, ideally predominantly plant oil. The dispersed aqueous phase is stabilised by starch, which is at least partly gelatinised after the cream has been pumped into the hot shell, thereby swelling and increasing the viscosity of the cream. Thus, the cream comprises at least 10%, preferably at least 20%, and ideally at least 30% starch, ideally initially-ungelatinised starch.

The products of the invention, and produced according to the process of the invention, include a dispersed water phase (droplets) as part of the inner cream component which has improved stability compared to those of the prior art. This results from the starch in the water phase swelling during processing (particularly immediately after the cream is injected into the hot shell), thereby increasing the viscosity, and stability, of the cream. This results in a decrease in the amount of water that leaches out of the cream and into the cereal-based shell. This has a number of effects: first, it improves the palatability of the product (in other words, it slows the decrease in palatability of the product over time as compared to a syrup-based cream; secondly, it improves the appearance of the product over time, as leaching of water into the shell has the effect of turning the shell an unsightly dark colour; thirdly, less leaching of water into the shell has an effect of improving the microbial stability of the product.

The invention will be more clearly understood from the following description of some embodiments hereinbefore described with reference to the attached Figure which shows a flow diagram for the process of the invention.

### Process

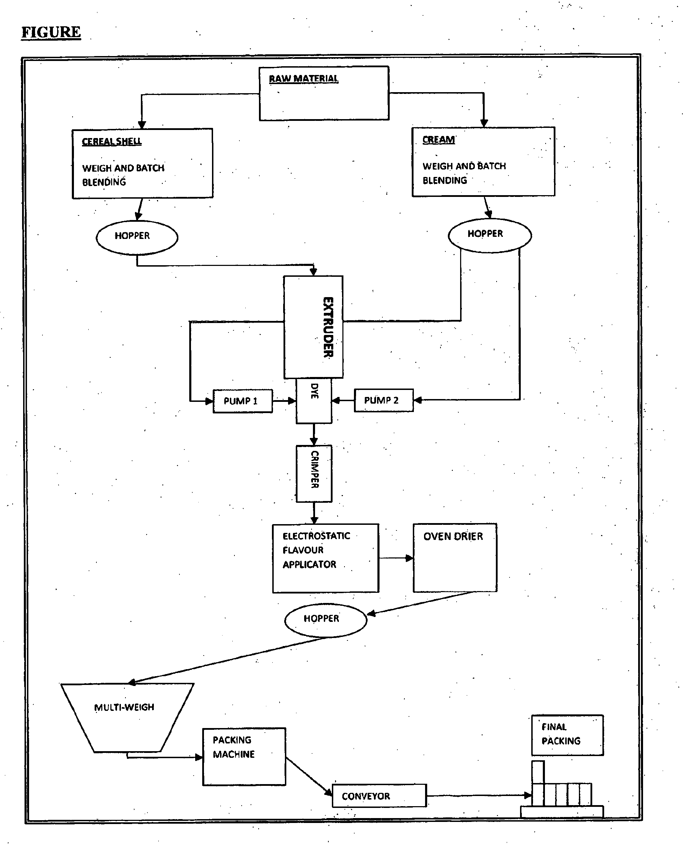

Referring to Figure 1, the process of manufacturing the co-extruded animal product is begun by weighing out and batching the dry ingredients. The dry ingredients consist of the cereal by-products, milk powders, and animal protein which are used to make the cereal shell of the treat. The dry ingredients are weighed and blended evenly in a hopper before adding them to the extruder cooker. The extruder cooker is maintained at 120°C @ 1000psi and is fully enclosed. A positive displacement screw rotates at a constant pace arid determines the transit time through the cooker. In general the transit time of all mixes is not more than 60 seconds. Enough water is added to the mixture to form a paste which is then positively displaced through the cooker and the dye at the opposite end. It is the dye which controls the physical dimensions of the final treat; the bigger or smaller the size of the dye the bigger or smaller the end size of the treat. Once the paste is passed through the dye of the extruder it forms the cereal shell. Once extruded the shell is hollow inside.

Separately and in a series different hoppers the cream ingredients are weighed out and blended to form a smooth homogenous paste.

First the oil and other oil soluble ingredients are weighted out and mixed together until a clear homogenous mixed is formed. Secondly the water soluble ingredients including the starch are weighed out and blended together in a separate holding vessel. Finally the water phase is slowly but steadily added to the oil phase while it is being mixed under reasonably high speeds. This crudely disperses the water in the oil phase. To improve stability of the cream textured component the mixture which is at room temperature is passed through a.single stage homogeniser to reduce the size of the dispersed droplets to less than 1 micron. The viscosity of this paste ranges from 100, 000mPas to 300, 000mPas. Typically the values are in the region of 200,000mPas.

This paste is mainly composed of oil but can also contain a number of different functional ingredients depending on the desired functionality of the product. Post extrusion the cream centre is injected into the centre of the cereal shell after which the cereal shell is cut into discrete sizes. The cereal shell can be cut tailored to from treats of small or large weights. After crimping the fully formed treats now pass through the electrostatic flavour applicator where the product specific palatants are added to the exterior of the treat. Research and development has confirmed that adding the flavourings to the exterior of the treat achieves the best results in terms of acceptance levels. The treats are now fully formed and are ready to be cooled and packed off. The treats are packed into sacks and left in a cool room to come back to room temperature. Once ambient temperature is achieved they are packed into foil sachets before being placed into card boxes and palletised.

**Example 1: Breath and Dental Variant**

| **Ingredients** | **%w/w** |
|---|---|
| Cereal Bases Outer Component | |
| Wheat Flour | 41.27 |
| Rice Flour | 26.28 |
| Full Cream Milk Powder Sub | 9.20 |
| Wheat Bran | 9.00 |
| Salmon Palatant | 8.00 |
| Poultry Meal | 5.00 |
| Salt | 1.25 |
| | 100.00 |
| Inner Cream | |
| Modified BnD Cream | 100.0 |
| | 100.00 |
| Coating | |
| | |

| Modified BnD Cream | |
|---|---|
| **Ingredients** | **% w/w** |
| Canola Oil | 56.18 |
| Corn Starch | 32.00 |
| Water | 6.00 |
| Glycerine | 5.00 |
| BHA | 0.02 |
| Sodium Tripolyphosphate | 0.75 |
| Eucalyptus Oil | 0.01 |
| Parsley Seed Oil | 0.01 |
| Cinnamon Oil | 0.01 |
| Vitamin E & Mixed Tocopherols | 0.0225 |
| | 100.00 |

**Example 2: Skin and Coat Variant**

| **Ingredients** | **%w/w** |
|---|---|
| Cereal Based Outer Component | |
| Wheat Flour | 41.27 |
| Rice Flour | 26.28 |
| Full Cream Milk Powder Sub | 9.20 |
| Wheat Bran | 9.00 |
| Salmon Palatant | 8.00 |
| Poultry Meal | 5.00 |
| Salt | 1.25 |
| | 100.00 |
| Inner Cream | |
| Modified SnC Cream | 100.0 |
| | 101.00 |
| Coating | |

| Modified SnC Cream | |
|---|---|
| **Ingredients** | **% w/w** |
| Canola Oil | 56.96 |
| Corn Starch | 32.00 |
| Water | 6.00 |
| Glycerine | 5.00 |
| BHA | 0.02 |
| Vitamin E & Mixed Tocopherols | 0.0225 |
| | 100.00 |

**Example 3: Hairball Variant**

| **Ingredients** | **%w/w** |
|---|---|
| Cereal Based Outer Component | |
| Wheat Flour | 41.27 |
| Rice Flour | 26.28 |
| Full Cream Milk Powder Sub | 9.20 |
| Wheat Bran | 9.00 |
| Salmon Palatant | 8.00 |
| Poultry Meal | 5.00 |
| Salt | 1.25 |
| | 100.00 |
| Inner Cream | |
| Defurr-Um paste | 100.0 |
| | 100.00 |
| Coating | |
| AFB Flavouring | 3.00 |

| Modified SnC Cream | |
|---|---|
| **Ingredients** | **%w/w** |
| Malt Syrup | 44.17 |
| Petrolatum | 42.00 |
| Glycerin | 7.00 |
| Natural Flavouring | 4.00 |
| Acacia Gum | 2.50 |
| Caramel | 0.20 |
| Sorbic Acid | 0.05 |
| Methylparaben | 0.05 |
| Propylparaben | 0.03 |
| Vitamin E Acetate | 0.001 |
| | 100.00 |

Through the advantages of process of the invention, it has been possible to successfully develop a cream centre with an improved stability. By incorporating an aqueous phase that is protected by an oil phase means that nutritionally sensitive ingredients like the vitamins and the other heat sensitive functional ingredients are somewhat protected from the high processing temperatures. This gives an advantage of being able to produce a delivery system for heat sensitive functional ingredients that are both water soluble and oil soluble.

The water activity of the cream centre is preferably an intermediate moisture food; therefore it has a water activity (aw) of between 0.50 and 0.65.

Through the development of the cereal shell route for the delivery of the palatants the need for adding further palatants as dust-ons post extrusion has been obviated. This change has improved the efficiencies inherent in the process of the invention.

Additionally the acceptance levels of double extruded treats formed according to the process of the invention against prior art extruded treats and have been able to prove that the product of the invention performs better. It has higher acceptance levels which indicates that the specifics of product with respect to the ingredients and the production process are better.

Additionally the rigors of the process of the invention provide assurance that the produced product is microbiologically stable if stored under correct ambient conditions. Ambient shelf life studies indicate that the product of the present invention is stable, while still maintaining superior feeding performance, even after 1 and half years. Prior art products and processes specify their similar products only function effectively for up to 1 year.

The reduction in the porosity of the cereal shell matrix reduces the ability of air to penetrate into the cream centre which has the added benefit of improving the barrier properties around the cream centre which improves the stability of the treat to rancidity.

The addition of increased levels of protein has the added benefit of improving the nutritional characteristics of the treat.

Increasing the viscosity of the aqueous phase has the added advantage of altering the mouth feel and texture of the cream centre which had the added benefit of improving the palatability of the treat.

Without being bound by theory, it is believed that the increase in viscosity of the aqueous phase has a secondary advantage of improving the stability to the treat to rancidity as the hydrocarbon phase (or oil phase) will be retarded from approaching the interfacial layer between the cream centre and the cereal shell.

The addition of a stabiliser to the aqueous phase has the added advantage of removing the sugar from the formulation. Products with no added sugar are nutritionally better than products with sugar as increased levels of sugar in the diets of animals are a major cause of obesity and diabetes.

The replacement of the non-lipid hydrocarbon phase with a plant oil has the added advantage of improving the nutritional qualities of the treats without inhibiting the capability to the production process to deliver a smooth cream centre.

The new formulated double extruded treats perform better in terms of palatability and stability because the cream centre is more stabilized. Palatability is improved because the texture and aroma of the cereal shell is maintained better as a result of the cream staying in the cavity of the shell for longer throughout the shelf life of the product.
Palatability is improved because the treat is now more stable to rancidity degradation because the cream centre does not migrate as readily to the surface and as such is not exposed to the air with resultant rancidity. Rancid oil in any product has a deleterious effect on the taste of the product.

Without being bound by theory, it is believed that the longer the texture and aroma of the cereal shell can be maintained, the better the treat performs in terms of palatability. Stability of the treat is improved because the stabilized cream centre is maintained in the cavity of the shell for longer. The oil in the cream centre has a reduced tendency to migrate to the surface thereby improving the product stability to rancidity.

## Claims

1. A method of producing a co-extruded dual component food product of the type comprising a cream textured inner component encapsulated within a cereal-based outer component, the method comprising the steps of:
- providing an aqueous phase comprising starch;
- mixing the aqueous phase with an oil phase to provide a cream textured inner component in the form of a water in oil emulsion having a first viscosity;
- preparing and cooking the cereal-based outer component;
- extruding the hot outer component; and
- while the outer component is still hot, injecting the cream textured inner component into the outer component to form the co-extruded dual component food product, whereby the heat from the outer component allows the starch in the aqueous phase to at least partly gelatinise to provide a cream textured component having a viscosity greater than the first viscosity.

2. A method as claimed in Claim 1 in which at least 10% starch (by weight of the cream textured component) is employed, or at least 20% starch (by weight of the cream textured component) is employed, or at least 30% starch (by weight of the cream textured component) is employed.

3. A method as claimed in Claim 1 in which at least 1% water (by weight of the cream textured component) is employed, or at least 3% water (by weight of the cream textured component) is employed, or at least 5% water (by weight of the cream textured component) is employed.

4. A co-extruded dual component food product produced by the method according to any one of claims 1 to 3, the food product comprising a cereal-based outer component and an inner cream textured component encapsulated within the cereal-based outer component, the cream textured component comprising an aqueous phase dispersed in a continuous oil phase, **characterised in that** the aqueous phase of the emulsion comprises at least partly gelatinised starch.

5. A food product as claimed in Claim 4 in which the protein content of the outer component is greater than 7% (w/w), preferably at least 8% (w/w), more preferably at least 9% (w/w), even more preferably at least 10% (w/w), still more preferably at least 15% (w/w) and even still more preferably at least 20% (w/w).

6. A food product as claimed in Claim 4 or 5 in which:
the cream textured component comprises at least 50% lipid (w/w), preferably at least 70% lipid (w/w), where in the lipid optionally comprises at least 50% plant oils (w/w).

7. A food product as claimed in any one of Claims 4 to 6 in which the water activity Aw of the cream textured component is less than or equal to 0.65, preferably is less than or equal to 0.60.

8. A food product as claimed in any one of Claims 4 to 7 in which the cereal-based outer component has a moisture content of less than 15% (w/w), preferably less than 10% (w/w) and more preferably less than 5% (w/w).

9. A food product as claimed in any one of Claims 4 to 8 in which the cereal-based outer component comprises at least 70% or 75% cereal by-products(w/w).

10. A food product as claimed in any one of Claims 4 to 9 in which the cereal-based outer component comprises at least 5% milk powder (w/w).

11. A food product as claimed in any one of Claims 4 to 10 in which the cereal-based outer component comprises at least 3% or at least 5% animal meal, wherein the animal meal is optionally selected from the group consisting of poultry meal, fish meal or other suitable animal origin meals.

12. A food product as claimed in any one of Claims 4 to 11 in which the cereal-based outer component comprises 0 to 10% liquid palatant or preferably the cereal-based outer component comprises 5 to 10% liquid palatant.

13. A food product as claimed in any one of Claims 4 to 12 in which the cream textured component comprises at least 10% starch (w/w), wherein preferably the cream textured component comprises at least 20% starch (w/w) and more preferably the cream textured component comprises at least 30% starch (w/w).

14. A food product as claimed in any one of Claims 4 to 13 in which: the starch is provided in the form of starch powder; and/or the aqueous phase comprises from 15% to 2% of the cream textured inner component (v/v).

15. A food product according to any one of claims 4 to 14, further **characterised in that** the cream textured component comprises at least 10% starch, wherein at least a portion of the starch is located within the aqueous phase in the form of at least partially gelatinised starch.

## Patentansprüche

1. Verfahren zum Herstellen eines koextrudierten Zweikomponenten-Lebensmittelproduktes vom Typ mit einer cremetexturierten Innenkomponente, die in einer auf Zerealien basierenden Außenkomponente eingekapselt ist, wobei das Verfahren die Schritte aufweist:
- Vorsehen einer wässrigen Phase, die Stärke enthält;
- Mischen der wässrigen Phase mit einer öligen Phase, um eine als cremetexturierte Innenkomponente in der Form einer Wasser-in-Öl-Emulsion mit einer ersten Viskosität zu erhalten;
- Vorbereiten und Kochen der zerealbasierten Außenkomponente;
- Extrudieren der heißen Außenkomponente; und
- während die Außenkomponente noch heiß ist, Injizieren der cremetexturierten Innenkomponente in die Außenkomponente, um das koextrudierte Zweikomponenten-Nahrungsmittelprodukt zu bilden, wobei die Wärme von der Außenkomponente ein zumindest teilweises Gelatinieren der Stärke in der wässrigen Phase erlaubt, um eine cremetexturierte Komponente mit einer Viskosität vorzusehen, die größer ist als die erste Viskosität.

2. Verfahren nach Anspruch 1, bei dem mindestens 10% Stärke (vom Gewicht der cremetexturierten Komponente) eingesetzt wird, oder mindestens 20% Stärke (vom Gewicht der cremetexturierten Komponente) eingesetzt wird, oder mindestens 30% Stärke (vom Gewicht der cremetexturierten Komponente) eingesetzt wird.

3. Verfahren nach Anspruch 1, beim dem mindestens 1% Wasser (vom Gewicht der cremetexturierten Komponente) eingesetzt wird, oder mindestens 3% Wasser (vom Gewicht der cremetexturierten Komponente) eingesetzt wird, oder mindestens 5% Wasser (vom Gewicht der cremetexturierten Komponente) eingesetzt wird.

4. Koextrudiertes Zweikomponenten-Nahrungsmittelprodukt, das durch das Verfahren gemäß einem der Ansprüche 1 - 3 hergestellt wird, wobei das Nahrungsmittelprodukt eine auf Zerealien basierende Außenkomponente und eine innere cremetexturierte Komponente aufweist, die in der zerealbasierten Außenkomponente eingekapselt ist, wobei die cremetexturierte Komponente eine wässrige Phase aufweist, die in einer kontinuierlichen Öl-Phase dispergiert ist, **dadurch gekennzeichnet, dass** die wässrige Phase der Emulsion zumindest eine teilweise gelatinierte Stärke aufweist.

5. Nahrungsmittelprodukt nach Anspruch 4, bei dem der Proteingehalt der Außenkomponente größer als 7% (w/w) ist, vorzugsweise mindestens 8% (w/w), bevorzugter mindestens 9% (w/w), noch bevorzugter mindestens 10% (w/w), und noch bevorzugter mindestens 15% (w/w) und selbst darüber hinaus noch bevorzugter mindestens 20% (w/w).

6. Nahrungsmittelprodukt nach Anspruch 4 oder 5, bei dem:
die cremetexturierte Komponente mindestens 50% Lipid (w/w) aufweist, vorzugsweise mindestens 70% Lipid (w/w), wobei in dem Lipid optional mindestens 50% Pflanzenöle (w/w) enthalten sind.

7. Nahrungsmittelprodukt nach einem der Ansprüche 4 - 6, bei dem die Wasseraktivität Aw der cremetexturierten Komponente kleiner oder gleich 0,65 ist, vorzugsweise kleiner oder gleich 0,60.

8. Nahrungsmittelprodukt nach einem der Ansprüche 4 - 7, bei dem die zerealbasierte Außenkomponente einen Feuchtigkeitsgehalt von weniger als 15% (w/w) hat, vorzugsweise weniger als 10% (w/w) und noch bevorzugter weniger als 5% (w/w).

9. Nahrungsmittelprodukt nach einem der Ansprüche 4 - 8, bei dem die zerealbasierte Außenkomponente mindestens 70% oder 75% Zereal-Zusatzprodukte (w/w) aufweist.

10. Nahrungsmittelprodukt nach einem der Ansprüche 4 - 9, bei dem die zerealbasierte Außenkomponente mindestens 5% Milchpulver (w/w) aufweist.

11. Nahrungsmittelprodukt nach einem der Ansprüche 4 - 10, bei dem die zerealbasierte Außenkomponente mindestens 3% oder mindestens 5% tierisches Fleisch aufweist, wobei das tierische Fleisch optional aus der Gruppe umfassend Geflügelfleisch, Fischfleisch oder andere geeignete tierische originäre Fleischarten aufweist.

12. Nahrungsmittelprodukt nach einem der Ansprüche 4 - 11, bei dem die zerealbasierte Außenkomponente 0 bis 10% flüssiges Palatant oder vorzugsweise die zerealbasierte Außenkomponente 5 bis 10 % flüssiges Palatant aufweist.

13. Nahrungsmittelprodukt nach einem der Ansprüche 4 - 12, bei dem die cremetexturierte Komponente mindestens 10% Stärke (w/w) aufweist, wobei vorzugsweise die cremetexturierte Komponente mindestens 20% Stärke (w/w) aufweist, und noch bevorzugter die cremetexturierte Komponente mindestens 30% Stärke (w/w) aufweist.

14. Nahrungsmittelprodukt nach einem der Ansprüche 4 - 13, bei dem: die Stärke in der Form von Stärkepulver vorgesehen ist; und/oder die wässrige Phase von 15% bis 2% der cremetexturierten Innenkomponente (v/v) aufweist.

15. Nahrungsmittelprodukt nach einem der Ansprüche 4 - 14, ferner **dadurch gekennzeichnet, dass** die cremetexturierte Komponente mindestens 10% Stärke aufweist, wobei mindestens ein Anteil der Stärke innerhalb der wässrigen Phase in der Form von zumindest teilweise gelatinierter Stärke lokalisiert ist.

## Revendications

1. Procédé de fabrication d'un produit alimentaire à deux composants co-extrudés du type comprenant un composant interne à texture crémeuse encapsulé dans un composant externe à base de céréales, le procédé comprenant les étapes suivantes :
- apport d'une phase aqueuse comprenant de l'amidon ;
- mélange de la phase aqueuse avec une phase huileuse pour obtenir un composant interne à texture crémeuse sous la forme d'une émulsion d'eau dans l'huile ayant une première viscosité ;
- préparation et cuisson du composant externe à base de céréales ;
- extrusion du composant externe chaud ; et
- alors que le composant externe est toujours chaud, injection du composant interne à texture crémeuse dans le composant externe pour former le produit alimentaire à deux composants co-extrudés, moyennant quoi la chaleur issue du composant externe permet à l'amidon de la phase aqueuse de se gélatiniser au moins partiellement pour donner un composant à texture crémeuse ayant une viscosité supérieure à la première viscosité.

2. Procédé tel que revendiqué dans la revendication 1 dans lequel au moins 10 % d'amidon (en poids du composant à texture crémeuse) sont employés, ou au moins 20 % d'amidon (en poids du composant à texture crémeuse) sont employés, ou au moins 30 % d'amidon (en poids du composant à texture crémeuse) sont employés.

3. Procédé tel que revendiqué dans la revendication 1 dans lequel au moins 1 % d'eau (en poids du composant à texture crémeuse) est employé, ou au moins 3 % d'eau (en poids du composant à texture crémeuse) sont employés, ou au moins 5 % d'eau (en poids du composant à texture crémeuse) sont employés.

4. Produit alimentaire à deux composants co-extrudés fabriqué par le procédé selon l'une quelconque des revendications 1 à 3, le produit alimentaire comprenant un composant externe à base de céréales et un composant interne à texture crémeuse encapsulé dans le composant externe à base de céréales, le composant à texture crémeuse comprenant une phase aqueuse dispersée dans une phase huileuse continue, **caractérisé en ce que** la phase aqueuse de l'émulsion comprend de l'amidon au moins partiellement gélatinisé.

5. Produit alimentaire tel que revendiqué dans la revendication 4 dans lequel la teneur en protéines du composant externe est supérieure à 7 % (p/p), de préférence d'au moins 8 % (p/p), plus préférablement d'au moins 9 % (p/p), même plus préférablement d'au moins 10 % (p/p), encore plus préférablement d'au moins 15 % (p/p) et même encore plus préférablement d'au moins 20 % (p/p).

6. Produit alimentaire tel que revendiqué dans la revendication 4 ou 5 dans lequel :
le composant à texture crémeuse comprend au moins 50 % de lipides (p/p), de préférence au moins 70 % de lipides (p/p), les lipides comprenant facultativement au moins 50 % d'huiles végétales (p/p).

7. Produit alimentaire tel que revendiqué dans l'une quelconque des revendications 4 à 6 dans lequel l'activité de l'eau Aw du composant à texture crémeuse est inférieure ou égale à 0,65, de préférence est inférieure ou égale à 0,60.

8. Produit alimentaire tel que revendiqué dans l'une quelconque des revendications 4 à 7 dans lequel le composant externe à base de céréales a une teneur en humidité inférieure à 15 % (p/p), de préférence inférieure à 10 % (p/p) et plus préférablement inférieure à 5 % (p/p).

9. Produit alimentaire tel que revendiqué dans l'une quelconque des revendications 4 à 8 dans lequel le composant externe à base de céréales comprend au moins 70 % ou 75 % de sous-produits de céréales (p/p).

10. Produit alimentaire tel que revendiqué dans l'une quelconque des revendications 4 à 9 dans lequel le composant externe à base de céréales comprend au moins 5 % de lait en poudre (p/p).

11. Produit alimentaire tel que revendiqué dans l'une quelconque des revendications 4 à 10 dans lequel le composant externe à base de céréales comprend au moins 3 % ou au moins 5 % de farine animale, la farine animale étant facultativement choisie dans le groupe constitué de la farine de volaille, de la farine de poisson ou autres farines d'origine animale adéquates.

12. Produit alimentaire tel que revendiqué dans l'une quelconque des revendications 4 à 11 dans lequel le composant externe à base de céréales comprend de 0 à 10 % d'agent de palatabilité liquide ou de préférence le composant externe à base de céréales comprend de 5 à 10 % d'agent de palatabilité liquide.

13. Produit alimentaire tel que revendiqué dans l'une quelconque des revendications 4 à 12 dans lequel le composant à texture crémeuse comprend au moins 10 % d'amidon (p/p), dans lequel de préférence le composant à texture crémeuse comprend au moins 20 % d'amidon (p/p) et plus préférablement le composant à texture crémeuse comprend au moins 30 % d'amidon (p/p).

14. Produit alimentaire tel que revendiqué dans l'une quelconque des revendications 4 à 13 dans lequel : l'amidon est apporté sous la forme d'une poudre d'amidon ; et/ou la phase aqueuse comprend de 15 % à 2 % du composant interne à texture crémeuse (v/v).

15. Produit alimentaire selon l'une quelconque des revendications 4 à 14, en outre **caractérisé en ce que** le composant à texture crémeuse comprend au moins 10 % d'amidon, au moins une partie de l'amidon se trouvant dans la phase aqueuse sous la forme d'amidon au moins partiellement gélatinisé.
